# EUROPÄISCHE PATENTANMELDUNG

(11) **EP 1 484 718 A1**
(43) Veröffentlichungstag der Anmeldung: **08.12.2004**
(21) Anmeldenummer: 03012231.1
(22) Anmeldetag: 06.06.2003
(51) Int. Cl.: G06T 17/40

(54) **Vorrichtung zur Handhabung grafischer Repräsentanzobjekte in einer Planungsumgebung**

(71) Anmelder: DOKA Industrie GmbH, A-3300 Amstetten (AT)
(72) Erfinder:
(74) Vertreter: HOFFMANN - EITLE

(57) **Zusammenfassung**

Vorrichtung für die Handhabung grafischer Repräsentanzobjekte in einer Planungsumgebung mit folgenden Merkmalen: Für einzelne Repräsentanzobjekte sind Beziehungspunkte, -linien, -flächen oder -raumbereiche definiert. Eine Überwachungseinrichtung (Computer) überwacht die Lage der Beziehungspunkte, -linien, -flächen oder - raumbereiche auf das Eintreten einer Aktivierungsbedingung ab, während die Repräsentanzobjekte von einem Benutzer in der Planungsumgebung gehandhabt werden. Beim Eintreten der Aktivierungsbedingung setzt die Überwachungseinrichtung entsprechend einer Verbindungsfunktion die Repräsentanzobjekte dauerhaft in Beziehung, so dass die weitere Handhabung der derart verbundenen Repräsentanzobjekte nur noch unter Einhaltung der Verbindungsfunktion möglich ist.

## Beschreibung

Die Erfindung betrifft eine Vorrichtung zur Handhabung, insbesondere Anordnung grafischer Repräsentanzobjekte, die reale Objekte innerhalb einer Planungsumgebung repräsentieren.

Um die Realität in einer Planungsumgebung zu planen (Planungsaufgabe), sind in der Planungsumgebung Repräsentanzobjekte erforderlich, die reale Objekte repräsentieren. Die Repräsentanzobjekte repräsentieren die realen Objekte innerhalb der Planungsumgebung, indem sie bestimmte Eigenschaften realer Objekte widerspiegeln, die in der Planungsumgebung eine Rolle spielen, während andere Eigenschaften in der Planungsumgebung nicht abgebildet werden. Die Repräsentanzobjekte können in der Planungsumgebung gehandhabt, zum Beispiel verändert, positioniert und zueinander in Beziehung gesetzt werden, so dass die Planungsaufgabe in der Planungsumgebung gelöst und das Ergebnis auf die Realität übertragen bzw. dort angewendet werden kann.

Zum Beispiel werden bei der Planung der Schalung für einen Baukörper aus Beton verschiedene Schalungselemente zusammengestellt, zueinander angeordnet, miteinander verbunden und fixiert, um die Schalung des Baukörpers in der Planungsumgebung nachzubilden. Das heißt, der Benutzer sucht in der Planungsumgebung Repäsentanzobjekte der für die Schalung der Baustruktur erforderlichen Schalungs- und Schalungshilfselemente aus und positioniert diese Repräsentanzobjekte entsprechend den Vorgaben aus dem Bauplan des Baukörpers. Dazu verschiebt er die Repräsentanzobjekte und richtet sie so zueinander aus, dass die Schalung für den Baukörper in der Planungsumgebung nachgebildet wird. Dabei kommt es vorrangig auf die räumlichen Abmessungen der Elemente zueinander an, sowie deren funktionales Zusammenspiel; dem Gewicht kommt demgegenüber in der Regel keine besondere Bedeutung zu. Die Repräsentanzobjekte bilden die Schalungs- und Schalungshilfselemente nach, indem sie vorrangig solche Eigenschaften aufweisen, die in der Planungsumgebung die Abmessungen und die funktionale Aspekte (z.B. Verbindungen und Fixierungen) widerspiegeln.

Andere Beispiele für Planungsumgebungen mit Repräsentanzobjekten sind u.a. aus den Bereichen CAD oder CAM bekannt.

Die bislang bekannten Systeme zur Darstellung von Repräsentanzobjekten in einer Planungsumgebung unterstützen den Benutzer dahingehend, dass das Ausrichten von Repräsentanzobjekten zueinander erleichtert wird und dass mehrere Repräsentanzobjekte zu Gruppen miteinander verbunden und gemeinsam positioniert werden können. Diese Unterstützung ist aber zumeist unzureichend, da es in starkem Maße dem Benutzer obliegt, die Anordnung der Repräsentanzobjekte und Abhängigkeiten zwischen ihnen richtig vorzusehen.

Vor diesem Hintergrund schlägt die Erfindung eine Vorrichtung vor, bei der für einzelne Repräsentanzobjekte Beziehungspunkte, -linien, -flächen oder -raumbereiche definiert sind, bei der eine Überwachungseinrichtung die Lage der Beziehungspunkte, -linien, -flächen oder -raumbereiche auf das Eintreten einer Aktivierungsbedingung überwacht, während die Repräsentanzobjekte von einem Benutzer in der Planungsumgebung gehandhabt werden, und die beim Eintreten der Aktivierungsbedingung entsprechend einer Verbindungsfunktion die Repräsentanzobjekte in Beziehung setzt, so dass die weitere Handhabung der derart verbundenen Repräsentanzobjekte nur noch unter Einhaltung der Verbindungsfunktion möglich ist.

Mit anderen Worten, die Erfindung offenbart eine Vorrichtung zur Handhabung grafischer Repräsentanzobjekte, die reale Objekte innerhalb einer Planungsumgebung repräsentieren, mit einer Anzeigeeinrichtung für die Anzeige der Repräsentanzobjekte; mit einer Handhabungseinrichtung für die Anordnung der Repräsentanzobjekte innerhalb der Planungsumgebung durch einen Benutzer; und mit einer Planungsumgebungsteuereinrichtung, die innerhalb der Planungsumgebung die Lage eines Beziehungspunkts, einer Beziehungslinie, einer Beziehungsfläche oder eines Beziehungsraumbereichs eines ersten Repräsentanzobjekts zu einem Beziehungspunkt, einer Beziehungslinie, einer Beziehungsfläche oder einem Beziehungsraumbereich eines zweiten Repräsentanzobjekts bestimmt und auf das Erfüllen einer Aktivierungsbedingung überwacht, und die innerhalb der Planungsumgebung die Beziehungspunkte, Beziehungslinien, Beziehungsflächen oder Beziehungsraumbereiche der Repräsentanzobjekte entsprechend einer Verbindungsfunktion zueinander derart in Beziehung setzt, dass die Handhabung solcher Repräsentanzobjekte, deren Beziehungspunkte, Beziehungslinien, Beziehungsflächen oder Beziehungsraumbereiche zueinander in Beziehung gesetzt sind, in Abhängigkeit von der durch die Verbindungsfunktion festgelegte Beziehung erfolgt.

Die Planungsumgebungsteuereinrichtung überwacht beispielsweise das Erfüllen einer Aktivierungsbedingung, bei der ein Abstand zwischen Beziehungspunkten, Beziehungslinien, Beziehungsflächen oder Beziehungsraumbereichen mit einem Grenzwert zu vergleichen ist und die Aktivierungsbedingung erfüllt ist, wenn der Abstand kleiner als der Grenzwert ist, und/oder bei der ein Winkel zwischen Beziehungslinien, Beziehungsflächen oder Beziehungsraumbereichen mit einem Grenzwinkel zu vergleichen ist und die Aktivierungsbedingung erfüllt ist, wenn der Winkel kleiner als der Grenzwinkel ist.

Vorteilhafterweise sind folgende Verbindungsfunktionen anwendbar, durch die Repräsentanzobjekte in Beziehung gesetzt werden:
Zwei Beziehungspunkte sind ortsgleich.
Ein Beziehungspunkt liegt auf einer Beziehungslinie.
Ein Beziehungspunkt liegt in einer Beziehungsfläche.
Ein Beziehungspunkt liegt in einem Beziehungsraumbereich liegt.
Zwei Beziehungslinien liegen aufeinander liegen.
Eine Beziehungslinie liegt in einer Beziehungsfläche.
Eine Beziehungslinie liegt in einem Beziehungsraumbereich.
Zwei Beziehungsflächen liegen ineinander.
Eine Beziehungsfläche liegt in einem Beziehungsraumbereich.
Zwei Beziehungsraumbereiche liegen ineinander.

In einer vorteilhaften Ausgestaltung sind eine Vielzahl von Aktivierungsbedingungen in einer Speichereinrichtung der Planungsumgebungsteuereinrichtung gespeichert; jedes Repräsentanzobjekt ist dann einer oder mehreren Aktivierungsbedingungen zuweisbar.

In einer weiteren vorteilhaften Ausgestaltung sind eine Vielzahl von Verbindungsfunktionen in einer Speichereinrichtung der Planungsumgebungsteuereinrichtung gespeichert; jedes Repräsentanzobjekt ist dabei einer oder mehreren Verbindungsfunktionen zuweisbar.

In einer bevorzugten Ausgestaltung sind eine oder mehrere Aktivierungsbedingungen und/oder eine oder mehrere Verbindungsfunktionen einem Repräsentanzobjekttyp (OT) zuweisbar; die Repräsentanzobjekte sind dabei einem Repräsentanzobjekttyp (OT) zuweisbar.

In einer weiteren vorteilhaften Ausgestaltung ist die Planungsumgebungsteuereinrichtung (3) ein Computer, insbesondere ein Personal Computer PC.

Da eine erfindungsgemäße Vorrichtung über eine geeignete Software bereitgestellt werden kann, konkretisiert sich die Erfindung auch als computerlesbarer Datenträger mit einem darauf aufgezeichneten Programm, das, wenn es in einen Computer mit Anzeigeeinrichtung und einer Handhabungseinrichtung geladen und ausgeführt wird, eine Vorrichtung mit den zuvor erwähnten Merkmalen und Ausgestaltungen realisiert.

Im folgenden wird die Erfindung anhand von Ausführungsbeispielen unter Bezugnahme auf die Zeichnungen näher erläutert, in denen zeigt:
- Figur 1: den Aufbau einer erfindungsgemäßen Vorrichtung;
- Figuren 2A bis 2D: ein erstes Beispiel zur Verdeutlichung der Beziehung zwischen Repräsentanzobjekten;
- Figuren 3A bis 3E: ein zweites Beispiel zur Verdeutlichung der Beziehung zwischen Repräsentanzobjekten;
- Figuren 4A bis 4C: eines drittes Beispiel zur Verdeutlichung der Beziehung zwischen Repräsentanzobjekten;
- Figur 5: ein viertes Beispiel zur Verdeutlichung der Beziehung zwischen Repräsentanzobjekten; und
- Figur 6: ein fünftes Beispiel zur Verdeutlichung der Beziehung zwischen Repräsentanzobjekten.

Erfindungsgemäß ist ein Repräsentanzobjekt eine definierte Abbildung eines realen Objektes in einer Planungsumgebung. Ein Repräsentanzobjekt besitzt Eigenschaften, die Eigenschaften des realen Objekts entsprechen und gegebenenfalls auch zusätzliche Eigenschaften, die für die Handhabung des Repräsentanzobjekts in der Planungsumgebung erforderlich sind. Zum Beispiel können einem Repräsentanzobjekt in der Planungsumgebung Abmessungen zugeordnet werden, die den Abmessungen des realen Objekts in der Wirklichkeit entsprechen, wobei festgelegt sein kann, dass sich innerhalb des durch die Abmessungen bestimmten Bereichs in der Planungsumgebung kein anderes Repräsentanzobjekt befinden kann. Erfindungsgemäß ist für jedes Repräsentanzobjekt außerdem zumindest ein Beziehungspunkt BP und/oder eine Beziehungslinie BL und/oder eine Beziehungsfläche BF und/oder ein Beziehungsraumbereich BR definiert.

Unter Handhabung der Repräsentanzobjekte in der Planungsumgebung wird insbesondere, aber nicht ausschließlich deren Positionierung zueinander verstanden. Durch die Handhabung der Repräsentanzobjekte ändert sich deren Verhältnis zueinander, beispielsweise die Lage (Anordnung) zwischen den Repräsentanzobjekten und innerhalb der Planungsumgebung.

Erfindungsgemäß sind Aktivierungsbedingungen *ab* vordefinierte Regeln, die eine Auswertung des Verhältnisses insbesondere der Beziehungspunkte BP, der Beziehungslinien BL, der Beziehungsflächen BF und der Beziehungsraumbereiche BR von zumindest zwei Repräsentanzobjekten festlegen, so dass auf der Basis der Auswertung eindeutig bestimmbar ist, ob die Aktivierungsbedingung ab erfüllt ist oder nicht.

Erfindungsgemäß sind Verbindungsfuntionen *vf* vordefinierte Regeln, die die Beziehungspunkte BP, die Beziehungslinien BL, die Beziehungsflächen BF und die Beziehungsraumbereiche BR von zumindest zwei Repräsentanzobjekten derart zueinander dauerhaft in Beziehung setzen, dass die zumindest zwei Repräsentanzobjekte in der Planungsumgebung nur noch unter Einhaltung der Verbindungsfunktion vf gehandhabt, insbesondere positioniert werden können.

Im folgenden werden diese Zusammenhänge anhand von Ausführungsbeispielen erläutert, so dass weitere Einzelheiten erkennbar werden.

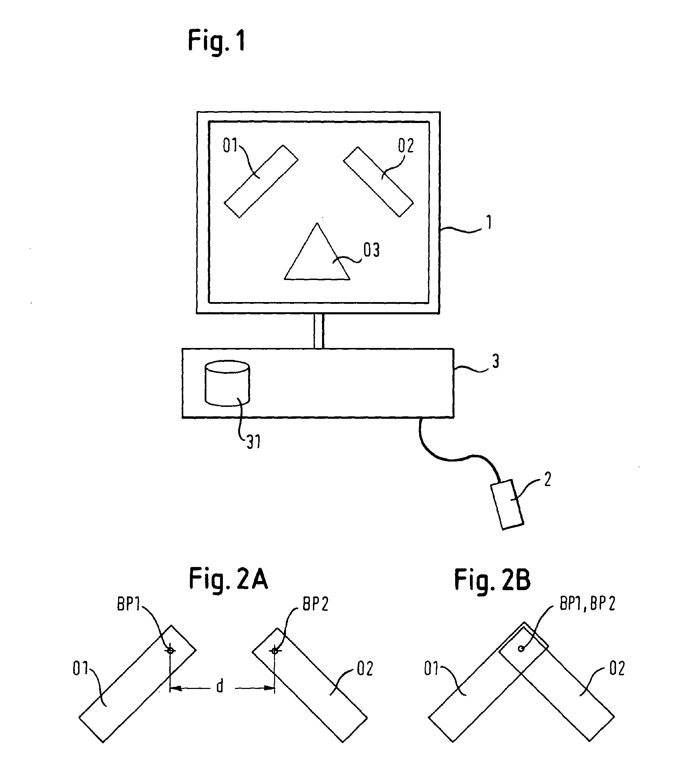

Wie Figur 1 zeigt, werden einem Benutzer einer erfindungsgemäßen Vorrichtung auf einer Anzeigeeinrichtung 1 (Monitor, LCD etc.) Repräsentanzobjekte O1, O2, O3 in einer Planungsumgebung angezeigt. Dem Benutzer steht eine Handhabungseinrichtung 2 (Tastatur, Maus, Trackball, Touch-Screen etc.) zur Verfügung, mir der er die Repräsentanzobjekte in der Planungsumgebung handhaben und insbesondere die Anordnung (Position) der Repräsentanzobjekte in der Anzeige und damit in der Planungsumgebung verändern kann. Während der Benutzer mit Hilfe der erfindungsgemäßen Vorrichtung die Anordnung der Repräsentanzobjekte verändert, ermittelt eine Planungsumgebungsteuereinrichtung 3 die Lage der Beziehungspunkte BP, Beziehungslinien BL, Beziehungsflächen BF oder Beziehungsraumbereiche BR der Repräsentanzobjekte zueinander. Bei der Planungsumgebungsteuereinrichtung, im folgenden auch PSE, handelt es sich in der Regel um einen Computer 3, auf dem ein entsprechendes Programm ausgeführt wird und an den zweckmäßigerweise sowohl die Anzeigeeinrichtung 1 und die Handhabungseinrichtung 2 angeschlossen sind. Bei der Überwachung der Repräsentanzobjekte O1, O2, O3 greift die Planungsumgebungsteuereinrichtung 3 auf eine oder mehrere Aktivierungsbedingungen ab zurück, um die Repräsentanzobjekte zueinander in Beziehung zu setzen, wenn eine der Aktivierungsbedingungen erfüllt ist. Diese Arbeitsweise der Planungsumgebungsteuereinrichtung 3 wird im folgenden anhand von Einzelbeispielen genauer erläutert.

In Figur 2A ist ein erstes Repräsentanzobjekt O1, für das der Beziehungspunkt BP1 definiert ist, und ein zweites Repräsentanzobjekt O2 gezeigt, für das der Beziehungspunkt BP2 definiert ist. Beide Repräsentanzobjekte können vom Benutzer frei angeordnet werden, wozu er die Handhabungseinrichtung 2 (vgl. Figur 1) verwendet. In Figur 2A ist ferner der Abstand d zwischen den Beziehungspunkten BP1 und BP2 gekennzeichnet.

Die Planungsumgebungsteuereinrichtung 3 (vgl. Figur 1) bestimmt die Lage der Beziehungspunkte BP1 und BP2 zueinander und überwacht das Eintreten einer Aktivierungsbedingung ab, die beispielsweise festlegt, dass die Bedingung erfüllt ist, wenn der Benutzer die betrachteten Repräsentanzobjekte derart angeordnet hat, dass der Abstand d zwischen den Beziehungspunkten der beiden Repräsentanzobjekte unter einem vordefinierten Grenzwert liegt. Mit anderen Worten, positioniert der Benutzer die Repräsentanzobjekte O1 und O2 in der Planungsumgebung derart, dass der Abstand d kleiner als ein Abstand d_{R} ist (d < d_{R}), der für einen der Beziehungspunkte BP1 oder BP2 in einer Aktivierungsbedingung *ab*_{*BP1*}(d<d_{R}) oder *ab*_{*BP2*}(d<d_{R}) festgelegt ist, stellt die PSE 3 fest, dass eine Aktivierungsbedingung erfüllt ist.

Beim Eintreten der Aktivierungsbedingung ab bringt die Planungsumgebungsteuereinrichtung 3 die Beziehungspunkte entsprechend einer Verbindungsfunktion *vf(BP1,BP2)* in Beziehung, die beispielsweise festgelegt, dass die beiden Beziehungspunkte stets dieselbe Position einnehmen müssen, was in Figur 2B gezeigt ist. Das bedeutet, dass der Benutzer die beiden Repräsentanzobjekte nun nur noch unter Einhaltung der Verbindungsfunktion *vf(BP1*=*BP2)* anordnen kann. Mit anderen Worten, wenn die Aktivierungsbedingung ab erfüllt ist, setzt die PSE 3 die beiden Repräsentanzobjekte O1 und O2 zueinander dauerhaft in Beziehung, beispielsweise dahingehend, dass die Beziehungspunkte PB1 und BP2 in der Planungsumgebung ortsgleich sein müssen (BP1=BP2).

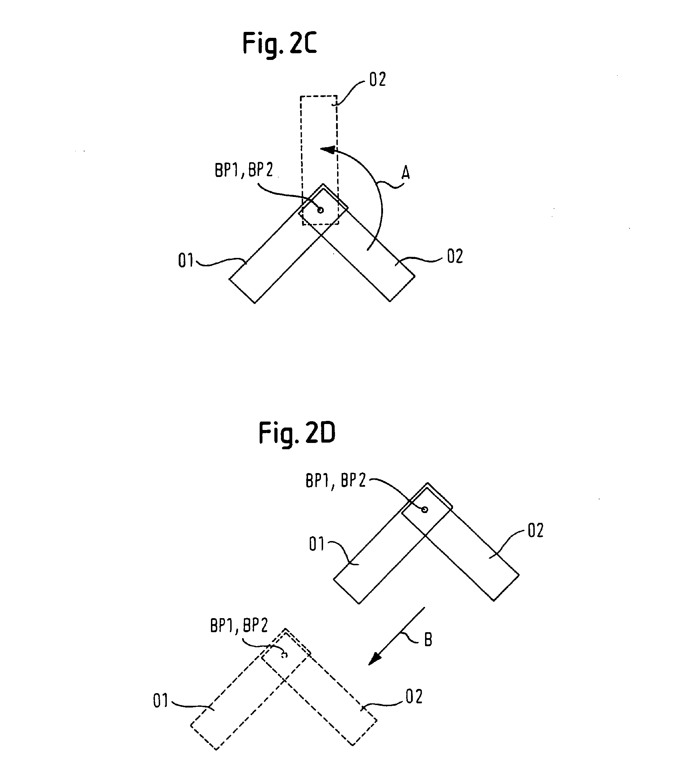

Dreht der Benutzer beispielsweise das Repräsentanzobjekt O1 um den Beziehungspunkt BP1, so verbleibt der Beziehungspunkt BP2 lageidentisch zum Beziehungspunkt BP1 , so dass die Verbindungsfunktion *vf(BP1*=*BP2)* eingehalten ist; das bedeutet, auch das Repräsentanzobjekt O2 ändert seine Lage in der Planungsumgebung nicht. In Figur 2C ist durch die gestrichelte Darstellung des Repräsentanzobjekts O2 angedeutet, dass das Repräsentanzobjekt O1 seine Lage nicht verändert, wenn der Benutzer nun das Repräsentanzobjekt O2 um den Beziehungspunkt BP2 dreht (Pfeil A), da die durch die Verbindungsfunktion vf*(BP1*=*BP2)* vorgegebene Beziehung zwischen den Beziehungspunkten BP1 und BP2 stets eingehalten wird, auch ohne dass die PSE 3 das erste Repräsentanzobjekt O1 bewegt.

Bewegt der Benutzer jedoch das Repräsentanzobjekt O1 anders, beispielsweise linear, so verändert er die Lage des Beziehungspunktes BP1 derart, dass der Beziehungspunkt BP2 folgt und dabei das Repräsentanzobjekt O2 mit sich nimmt, so dass auch das Repräsentanzobjekt O2 seine Lage ändert (vgl. Figur 2D). Mit anderen Worten, verschiebt der Benutzer das Repräsentanzobjekt O2, wie Figur 2D zeigt (Pfeil B), so verschiebt sich der Beziehungspunkt BP2, so dass die PSE 3 wegen der Verbindungsfunktion *vf(BP1*=*BP2)* auch das Repräsentanzobjekt O1 verschiebt.

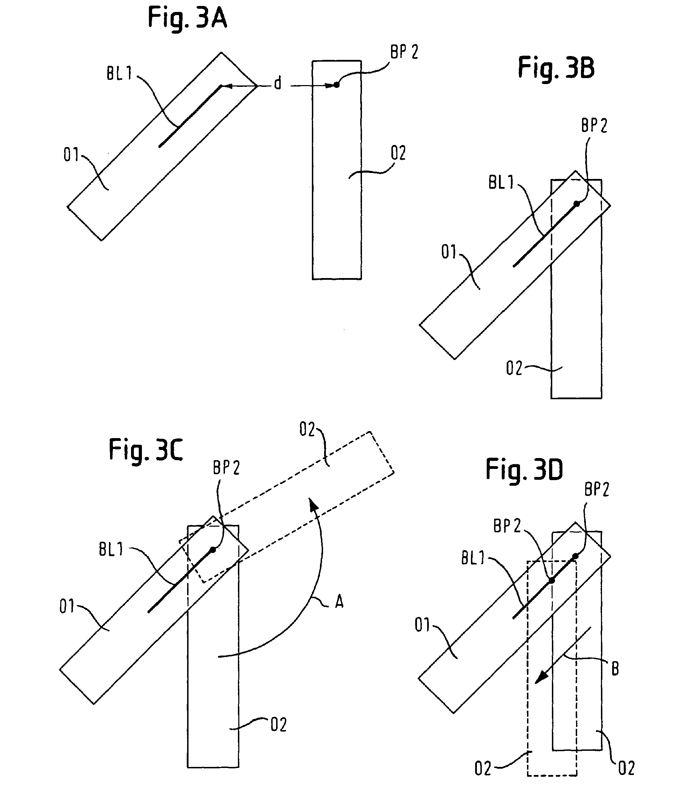

In Figur 3A sind ebenfalls zwei Repräsentanzobjekte O1 und O2 dargestellt; für das erste Repräsentanzobjekt O1 ist eine Beziehungslinie BL1 und für das zweite Repräsentanzobjekt O2 ist ein Beziehungspunkt BP2 definiert. In Figur 3A ist ferner der Abstand d zwischen der Beziehungslinie BL1 und dem Beziehungspunkt BP2 gekennzeichnet. Ordnet der Benutzer die Repräsentanzobjekte O1 und O2 so an, dass der Abstand d kleiner als ein Abstand d_{R} (d<d_{R}) ist, der für die Beziehungslinie BL1 oder den Beziehungspunkt BP2 in einer Aktivierungsbedingung *ab*_{*BL1*} *(d<d*_{*R*}*)* bzw. *ab*_{*BP2*}*(d<d*_{*R*}*)* festgelegt ist, setzt die Planungsumgebungsteuerungseinrichtung 3 die beiden Repräsentanzobjekte O1 und O2 zueinander entsprechend einer Verbindungsfunktion *vf(BL1,BP2)* in Beziehung, beispielsweise dahingehend, dass der Beziehungspunkt BP2 stets auf der Beziehungslinie BL1 liegen muss, was der Verbindungsfunktion *vf(BP2 liegt auf BL1)* entspricht. Entsprechend werden die Repräsentanzobjekte angeordnet, was in Figur 3B gezeigt ist. Die Planungsumgebungsteuereinrichtung 3 stellt sicher, dass die Position der beiden Repräsentanzobjekte O1 und O2 nunmehr nur noch unter Einhaltung der Beziehung entsprechend der Verbindungsfunktion *vf(BP2 liegt auf BL1)* erfolgt.

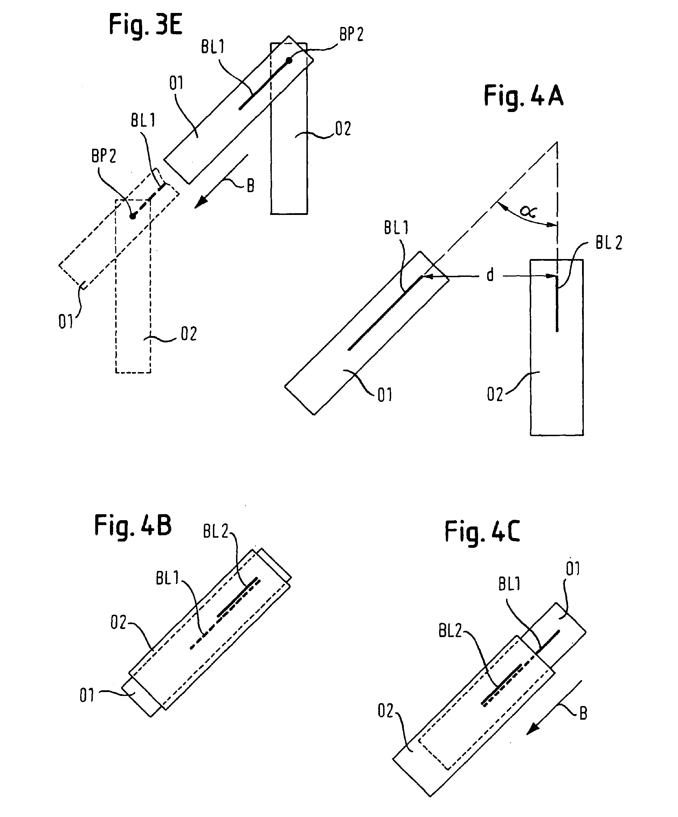

In Figur 3C ist durch die gestrichelte Darstellung des Repräsentanzobjekts O2 angedeutet, dass die Planungsumgebungsteuereinrichtung 3 die Lage des Repräsentanzobjekts O1 nicht verändert, wenn der Benutzer das Repräsentanzobjekt O2 um den Beziehungspunkt BP2 dreht (Pfeil A), da die durch die Verbindungsfunktion *vf(BP2 liegt auf BL1)* vorgegebene Beziehung zwischen der Beziehungslinie BL1 und dem Beziehungspunkt BP2 stets eingehalten wird. Verschiebt der Benutzer das zweite Repräsentanzobjekt O2, wie Figur 3D zeigt (Pfeil B), so verschiebt sich der Beziehungspunkt BP2, jedoch entlang der Beziehungslinie BL1. Auch bei dieser Handhabung (Bewegung) des Repräsentanzobjekts O2 in der Planungsumgebung bleibt die durch die Verbindungsfunktion *vf(BP2 liegt auf BL1)* vorgegebene Beziehung zwischen der Beziehungslinie BL1 und dem Beziehungspunkt BP2 stets eingehalten. Dies gilt solange, wie die Bewegung des zweiten Repräsentanzobjekts O2 nicht dazu führt, das der Beziehungspunkt BP2 eines der Enden der Beziehungslinie BL1 erreicht und die Bewegung fortgesetzt wird. Denn dann führt die Bewegung des zweiten Repräsentanzobjekts O2 dazu, das die PSE 3 auch eine Verschiebung des ersten Repräsentanzobjekts O1 vornimmt, damit die Verbindungsfunktion vf(BP2 liegt auf BL1) eingehalten bleibt. Eine entsprechend verschobene Anordnung der Repräsentanzobjekte O1 und O2 zeigt beispielhaft Figur 3E, in der auch erkennbar ist, dass der Beziehungspunkt BP2 ein Ende der Beziehungslinie BL1 erreicht hat und die Verbindungsfunktion *vf(BP2 liegt auf BL1)* eingehalten wird, wenn beide Repräsentanzobjekts verschoben werden. Es ist offensichtlich, dass die beiden Repräsentanzobjekte zueinander verdreht werden können, solange der Beziehungspunkt BP2 auch der Drehpunkt der Bewegung ist, da dann die Verbindungsfunktion *vf(BP2 liegt auf BL1)* stets erfüllt ist.

In Figur 4A sind zwei Repräsentanzobjekte O1 und O2 mit jeweils einer Beziehungslinie BL1 bzw. BL2 dargestellt. Dabei ist zu beachten, das die Beziehungslinie BL1 in dem gezeigten Beispiel länger ist als die Beziehungslinie BL2. In Figur 4A ist ferner der Abstand d zwischen den Beziehungslinien BL1 und BL2 und ein Schnittwinkel α gekennzeichnet. Ordnet der Benutzer die Repräsentanzobjekte O1 und O2 so an, dass der Abstand d kleiner als ein Abstand d_{R} ist (d<d_{R}) und gleichzeitig der Schnittwinkel kleiner ist als α_{R}, was für eine der Beziehungslinien BL1 oder BL2 in einer Aktivierungsbedingung *ab*_{*BL1*}*(d*<*d*_{*R*}*, a*<*aR)* bzw. *ab*_{*BL2*}(*d*<*d*_{*R*}, *a*<*aR*) festgelegt sind, setzt die Planungsumgebungsteuereinrichtung 3 die beiden Repräsentanzobjekte O1 und O2 zueinander entsprechend einer Verbindungsfunktion *vf(BL1,BL2)* in Beziehung, beispielsweise dahingehend, dass die Beziehungslinien BL1 und BL2 aufeinander liegen müssen, was der Verbindungsfunktion *vf*(*BL1 liegt auf BL2*) entspricht. Entsprechend werden die Repräsentanzobjekte O1 und O2 angeordnet, was in Figur 4B gezeigt ist. Jedoch sind die beiden Beziehungslinien zur besseren Erkennbarkeit in Figur 4B nebeneinander dargestellt.

In Figur 4C, in der die beiden Beziehungslinien BL1 und BL2 zur besseren Erkennbarkeit ebenfalls nebeneinander dargestellt sind, ist eine verschobene Anordnung des Repräsentanzobjekts O2 angedeutet; da die Handhabung (Bewegung) des Repräsentanzobjekts O2 durch den Benutzer so erfolgte, dass sich die kürzere Beziehungslinie BL2 entlang der längeren Beziehungslinie BL1 bewegte, hat die PSE 3 das erste Repräsentanzobjekt O1 nicht bewegt, da trotz der Verschiebung des zweiten Repräsentanzobjekts O2 stets die Verbindungsbeziehung *vf(BL1 liegt auf BL2)* eingehalten ist.

Erst wenn das Ende der Beziehungslinie BL2 das entsprechende Ende der Beziehungslinie BL1 erreicht, kann bei einer Fortsetzung der Bewegung des zweiten Repräsentanzobjekts O2 die Verbindungsbedingung *vf(BL1 liegt auf BL2)* nur eingehalten werden, wenn das erste Repräsentanzobjekt O1 durch die Planungsumgebungsteuereinrichtung 3 mitbewegt wird.

Wie aus Figur 4B oder 4C unmittelbar ersichtlich bleibt die Verbindungsbeziehung *vf(BL1 liegt auf BL2)* bei einer Drehung eines der Repräsentanzobjekte nur erhalten, wenn die PSE 3 auch das jeweils andere Repräsentanzobjekt dreht, d.h. wenn beide Repräsentanzobjekte gedreht werden.

In den Figuren 4A bis 4C sind die Beziehungslinien BL1 und BL2 Strecken. Selbstverständlich können Beziehungslinien auch andere beliebige Verläufe aufweisen.

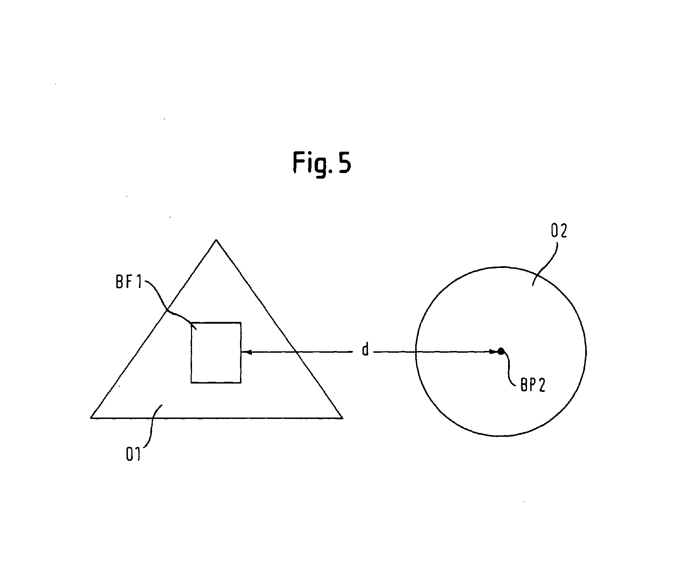

Ein weiteres Beispiel ist in Figur 5 gezeigt. Für ein Repräsentanzobjekt O1 ist eine Beziehungsfläche BF1 definiert, für ein Repräsentanzobjekt O2 ein Beziehungspunkt BP1. Beim Positionieren der Repräsentanzobjekte O1 und O2 in der Planungsumgebung durch einen Benutzer der erfindungsgemäßen Vorrichtung überwacht die Planungsumgebungsteuereinrichtung 3 eine oder mehrere Aktivierungsbedingungen *ab,* beispielsweise dahingehend, ob der Abstand d zwischen der Beziehungsfläche BF1 und dem Beziehungspunkt BP2 kleiner als ein vorgegebener Abstand d_{R}, was den Aktivierungsbedingungen *ab*_{*BL1*}*(d*<*d*_{*R*}*)* oder *ab*_{*BP2*}*(d*<*d*_{*R*}*)* entspricht. Wenn die Aktivierungsbedingung eintritt, wird eine Beziehung zwischen den beiden Repräsentanzobjekten entsprechend einer Verbindungsfunktion *vf(BF1, BP2)* aufgebaut, die beispielsweise festlegt, dass der Beziehungspunkt BP2 stets innerhalb der Beziehungsfläche BF1 liegen muss, was der Verbindungsfunktion *vf(BP2) liegt in BF1)* entspricht. Die Planungsumgebungsteuereinrichtung 3 überwacht die Einhaltung der Verbindungsbedingung *vf(BF1, BP2),* wenn der Benutzer eines der Repräsentanzobjekte handhabt. Welche Bewegungen möglich sind und wie die beiden Repräsentanzobjekte sich vor dem Hintergrund der Verbindungsfunktion *vf* unabhängig voneinander und gemeinsam miteinander bewegen, ergibt sich durch Übertragung der Erläuterungen aus den vorangegangenen Beispielen der Figuren 2A bis 2D, 3A bis 3E und 4A bis 4C. Letztlich legt die Beziehungsfläche BF1 den Bereich einer unabhängigen Bewegung des Repräsentanzobjekts O2 fest. Geht die Bewegung des Repräsentanzobjekts O2 darüber hinaus, wird das Repräsentanzobjekt O1 mit bewegt. Analoges gilt für den Fall, dass das Repräsentanzobjekt O1 vom Benutzer in der Planungsumgebung bewegt wird. Sämtliche Überlegungen, die anhand der Figuren 2A bis 2D, 3A bis 3E, 4A bis 4C und 5 erläutert wurden, sind analog auf Beziehungsraumbereiche BR übertragbar.

Bei den bisher erläuterten Repräsentanzobjekten war nur ein Beziehungspunkt, eine Beziehungslinie oder eine Beziehungsfläche definiert. Selbstverständlich können für ein Repräsentanzobjekte mehrere Beziehungselemente definiert werden, die in einer Aktivierungsbedingung *ab* und einer Verbindungsfunktion *vf* berücksichtigt werden können.

Wie bei den vorangegangenen Beispielen erläutert, stellt die Planungsumgebungsteuereinrichtung 3 sicher, dass immer dann, wenn der Benutzer der erfindungsgemäßen Vorrichtung eines der Repräsentanzobjekte handhabt (anordnet), die Aktivierungsbedingungen *ab* überwacht werden und die Verbindungsbeziehungen *vf* erfüllt bleiben. Dabei ist vorteilhaft, dass die Handhabungseinrichtung 2 an der Planungsumgebungsteuereinrichtung 3 angeschlossen ist und die Planungsumgebungsteuereinrichtung 3 auch die Anzeigeeinrichtung 1 ansteuert. Dadurch können die von der Handhabungseinrichtung 2 ausgehenden Befehle zur Handhabung (Bewegung) der Repräsentanzobjekte in der Planungsumgebung direkt unter Berücksichtung der Aktivierungsbedingungen *ab* und der Verbindungsfunktionen *vf* in eine entsprechende Darstellung der Planungsumgebung auf der Anzeigeeinrichtung 1 umgesetzt werden.

Vorteilhafterweise besitzt die Planungsumgebungsteuereinrichtung 3 eine Speichereinrichtung 31 für die Speicherung der Aktivierungsbedingungen ab und der Verbindungsfunktionen vf, wobei die Speicherung vorzugsweise nicht-flüchtig erfolgt.

Von besonderer Bedeutung für eine erfindungsgemäße Vorrichtung ist, dass durch die Verbindungsfunktionen vf die mit einander in Beziehung stehenden Repräsentanzobjekte in der Planungsumgebung ein gemeinschaftliches Verhalten zeigen, da die Planungssteuereinrichtung 3 durch Beeinflussung der Repräsentanzobjekte in der Planungsumgebung sicherstellt, dass stets alle geltenden Verbindungsbeziehungen vf eingehalten werden. Das führt dazu, dass mehrere Repräsentanzobjekte ein aufeinander abgestimmtes Bewegungsverhalten zeigen, wenn sie von einem Benutzer in der Planungsumgebung gehandhabt werden, wobei aber durch die zum Teil vorhandenen Freiheiten dem Gesamtsystem der verbundenen Repräsentanzobjekte eine eigene Dynamik zueigen ist. Dieser besondere Aspekt wird im folgenden anhand eines Beispiels erläutert.

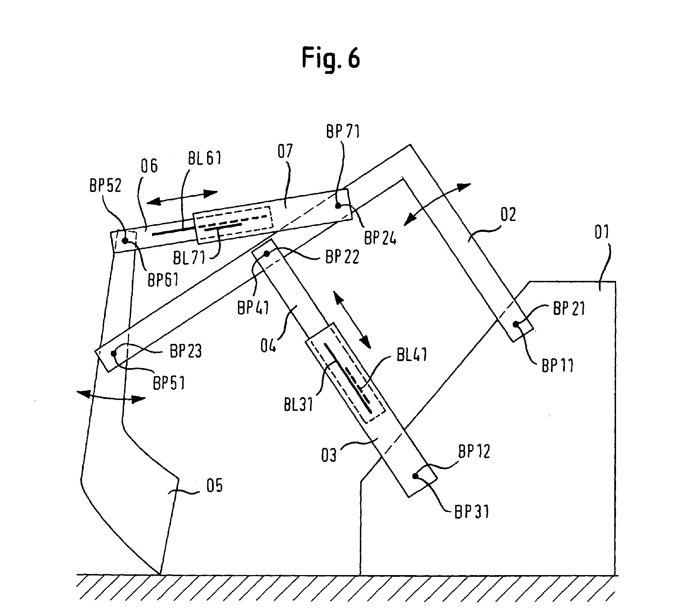

In Fig. 6 sind mehrere Repräsentanzobjekte O1 bis O7 dargestellt, die in einer Planungsumgebung zueinander positioniert sind und bei denen die Planungsumgebungsteuereinrichtung 3 aufgrund von erfüllten Aktivierungsbedingungen *ab* verschiedene Beziehungen entsprechend mehreren Verbindungsfunktionen vf hergestellt hat.

Ein erstes Repräsentanzobjekt O1 stellt in der Planungsumgebung den Grundkörper eines Baggers dar und besitzt einen ersten Beziehungspunkt BP11 und einen zweiten Beziehungspunkt BP12. An dem ersten Beziehungspunkt BP11 ist ein L-förmiger Ausleger O2 mit einem ersten Beziehungspunkt BP21 angeordnet. Aufgrund der Verbindungsfunktion *vf(BP11*=*BP21)* der Beziehungspunkte BP11 und BP21 kann der L-förmige Ausleger O2 um den oberen Beziehungspunkt BP11 geschwenkt werden.

An dem zweiten Beziehungspunkt BP12 des ersten Repräsentanzobjekts O1 ist ein drittes Repräsentanzobjekt 03 angeordnet, das neben einem Beziehungspunkt BP31 eine Beziehungslinie BL31 aufweist. Die Beziehungslinie BL31 liegt auf der Beziehungslinie BL41 eines vierten Repräsentanzobjekts O4, das ferner einen Beziehungspunkt BP41 aufweist, der an einem zweiten Beziehungspunkt BP22 des zweiten Repräsentanzobjekts O2 angeordnet ist. Mit anderen Worten, für die Beziehungslinien BL31 und BL41 gilt die Verbindungsfunktion *vf(BL31 liegt auf BL41)* und für die Beziehungspunkte BP12 und BP31 gilt die Verbindungsfunktion *vf(BP12*=*BP31),* sowie für die Beziehungspunkte BP22 und BP41 die Verbindungsfunktion *vf(BP22*=*BP41).*

Die Planungsumgebungsteuereinrichtung 3 stellt sicher, dass die Verbindungsfunktionen
*vf(BP11*=*BP21)*
*vf(BL31 liegt auf BL41)*
*vf(BP12*=*BP31)*
*vf(BP22*=*BP41)*
an den Beziehungspunkten bzw. den Beziehungslinien der Repräsentanzobjekte O1 bis O4 eingehalten werden, wenn eines der Repräsentanzobjekte von einem Benutzer der erfindungsgemäßen Vorrichtung gehandhabt (bewegt) wird. Das bedeutet, dass ein Verschwenken des Auslegers (Repräsentanzobjekt O2) nur in dem Maße möglich ist, wie das dritte und das vierte Repräsentanzobjekt O3 und O4 zueinander verschoben werden können. Damit ist das Gesamtsystem aus den vier Repräsentanzobjekten O1 bis O4 zwar gemeinsam handhabbar, jedoch in einer dynamischen Art, da die Beziehungen zwischen den Repräsentanzobjekten in Abhängigkeit von den Verbindungsfunktionen bestehen. Dabei werden sehr realitätsnahe Eigenschaften der Systeme in der Planungsumgebung verwirklicht. Offensichtlich spiegelt das Teilsystem aus dem dritten Repräsentanzobjekt O3 und dem vierten Repräsentanzobjekt O4 einen Hydraulikzylinder wieder, obwohl keines der einzelnen Repräsentanzobjekte O3 oder O4 in diesem Sinne eine Charakterisierung erfahren hat. Durch die erfindungsgemäße Verbindungsfunktion zwischen den beiden Repräsentanzobjekten entwickelt sich diese Eigenschaft des Teilsystems in der Planungsumgebung.

Das zweite Repräsentanzobjekt O2 weist ferner einen dritten Beziehungspunkt BP23 auf, an dem ein fünftes Repräsentanzobjekt O5, das die Baggerlöffel repräsentiert, angeordnet ist, indem der erste Beziehungspunkt 51 des fünften Repräsentanzobjekts O5 ortsgleich mit dem dritten Beziehungspunkt BP23 des zweiten Repräsentanzobjekts O2 ist, was die Planungsumgebungsteuereinrichtung 3 durch Anwenden einer Verbindungsfunktion vf sicherstellt. Das fünfte Repräsentanzobjekt 05 weist einen zweiten Beziehungspunkt BP52 auf, an dem ein sechstes Repräsentanzobjekt 06 angeordnet ist. Das sechste Repräsentanzobjekt besitzt einen Beziehungspunkt BP61 und eine Beziehungslinie BL61. Der Beziehungspunkt BP61 des sechsten Repräsentanzobjekts 06 ist gemäß einer Verbindungsfunktion vf ortsgleich mit dem zweiten Beziehungspunkt BL52 des fünften Repräsentanzobjekts 05. Die Beziehungslinie BL61 des sechsten Repräsentanzobjekts 06 liegt einer Verbindungsfunktion vf entsprechend auf der Beziehungslinie BL71 eines siebten Repräsentanzobjekts 07, das neben der Beziehungslinie BL71 einen Beziehungspunkt BP71 aufweist. Dieser Beziehungspunkt BP71 ist ortsgleich mit einem vierten Beziehungspunkt BP24 des zweiten Repräsentanzobjekts O2, was in einer Verbindungsfunktion festgelegt ist.

Die Verbindungsfunktionen, die die PSE 3 in Bezug auf die Repräsentanzobjekte O2, O5, O6 undO7 auswertet, sind:
*vf(BP23*=*BP51)*
*vf(BP52*=*BP61)*
*vf(BL61 liegt auf BL71)*
*vf (BP71*=*BP24)*

Auf diese Weise wird gewährleistet, dass diese Repräsentanzobjekte ebenfalls mit Eigendynamik gemeinsam reagieren, wenn der Benutzer eines der Repräsentanzobjekte handhabt.

Zusammengefasst und mit anderen Worten lässt sich eine erfindungsgemäße Vorrichtung für die Handhabung grafischer Repräsentanzobjekte in einer Planungsumgebung durch folgende Merkmale charakterisieren:
- Für einzelne Repräsentanzobjekte sind Beziehungspunkte, -linien, -flächen oder - raumbereiche definiert.
- Eine Überwachungseinrichtung (Computer) überwacht die Lage der Beziehungspunkte, -linien, -flächen oder -raumbereiche auf das Eintreten einer Aktivierungsbedingung ab, während die Repräsentanzobjekte von einem Benutzer in der Planungsumgebung gehandhabt werden.
- Beim Eintreten der Aktivierungsbedingung setzt die Überwachungseinrichtung entsprechend einer Verbindungsfunktion die Repräsentanzobjekte dauerhaft in Beziehung, so dass die weitere Handhabung der derart verbundenen Repräsentanzobjekte nur noch unter Einhaltung der Verbindungsfunktion möglich ist.

Für die praktische Umsetzung der erfindungsgemäßen Vorrichtung ist von Vorteil, wenn die PSE 3 zulässt, dass Repräsentanzobjekttypen OT definiert werden, für die Beziehungselemente BP, BL, BF und BR definiert werden und denen Aktivierungsbedingungen und Verbindungsfunktionen zugeordnet werden. Einzelne Repräsentanzobjekte können dann einzelnen Repräsentanzobjekttypen OT zugeordnet werden, was die Zuordnung der Beziehungselemente BP, BL, BF und BR, der Aktivierungsbedingungen und der Verbindungsfunktionen zu einem Repräsentanzobjekt vereinfacht. Überdies können auf diese Weise bereits vorhandene Repräsentanzobjekte aus anderen grafischen Planungssystemen mit den erfindungsgemäßen Eigenschaften ausgestattet werden.

Sofern in der vorangegangenen Beschreibung der Erfindung davon die Rede war, dass die Repräsentanzobjekte dauerhaft in Beziehung gesetzt werden, bedeutet das nicht, dass die Beziehungen nicht wieder aufgelöst werden können, was zum Beispiel im Fehlerfall erforderlich ist. Die PSE 3 ermöglicht dem Benutzer eine entsprechende Einwirkung über die Handhabungseinrichtung 2. Ferner kann vorgesehen werden, dass die Aktivierungsbedingung nur eines Repräsentanzobjektes oder einer Gruppe von Repräsentanzobjekten überwacht wird, damit keine vom Benutzer nicht beabsichtigten Beziehungen zwischen Repräsentanzobjekten hergestellt werden. Ganz allgemein ist festzuhalten, dass bei der praktischen Umsetzung der Erfindung auf zahlreiche andere Funktionalitäten zurückgegriffen werden kann, die aus dem Bereich vorhandener Vorrichtungen zur Handhabung grafischer Repräsentanzobjekte in einer Planungsumgebung bekannt sind.

## Patentansprüche

1. Vorrichtung zur Handhabung grafischer Repräsentanzobjekte (O1, O2), die reale Objekte innerhalb einer Planungsumgebung repräsentieren,
a.mit einer Anzeigeeinrichtung (1) für die Anzeige der Repräsentanzobjekte (O1, O2);
b.mit einer Handhabungseinrichtung (2) für die Anordnung der Repräsentanzobjekte (O1, O2) innerhalb'der Planungsumgebung durch einen Benutzer; und
c.mit einer Planungsumgebungsteuereinrichtung (3),
i. die innerhalb der Planungsumgebung die Lage eines Beziehungspunkts (BP1), einer Beziehungslinie (BL1), einer Beziehungsfläche (BF1) oder eines Beziehungsraumbereichs (BR1) eines ersten Repräsentanzobjekts (O1) zu einem Beziehungspunkt (BP2), einer Beziehungslinie (BL2), einer Beziehungsfläche (BF2) oder einem Beziehungsraumbereich (BR2) eines zweiten Repräsentanzobjekts (O2) bestimmt und auf das Erfüllen einer Aktivierungsbedingung (ab) überwacht, und
ii. die innerhalb der Planungsumgebung die Beziehungspunkte (BP), Beziehungslinien (BL), Beziehungsflächen (BF) oder Beziehungsraumbereiche (BR) der Repräsentanzobjekte (O1, O2, O3) entsprechend einer Verbindungsfunktion (vf) zueinander derart in Beziehung setzt, dass die Handhabung solcher Repräsentanzobjekte, deren Beziehungspunkte (BP), Beziehungslinien (BL), Beziehungsflächen (BF) oder Beziehungsraumbereiche (BR) zueinander in Beziehung gesetzt sind, in Abhängigkeit von der durch die Verbindungsfunktion (vf) festgelegte Beziehung erfolgt.

2. Vorrichtung nach Anspruch 1, **dadurch gekennzeichnet, dass** die Planungsumgebungsteuereinrichtung (3) das Erfüllen einer Aktivierungsbedingung (*ab*) überwacht, bei der ein Abstand (d) zwischen Beziehungspunkten (BP), Beziehungslinien (BL), Beziehungsflächen (BF) oder Beziehungsraumbereichen (BR) mit einem Grenzwert (d_{R}) zu vergleichen ist und die Aktivierungsbedingung (ab) erfüllt ist, wenn der Abstand kleiner als der Grenzwert ist.

3. Vorrichtung nach Anspruch 1 oder 2, **dadurch gekennzeichnet, dass** die Planungsumgebungssteuereinrichtung (3) das Erfüllen einer Aktivierungsbedingung (ab) überwacht, bei der ein Winkel (α) zwischen Beziehungslinien (BL), Beziehungsflächen (BF) oder Beziehungsraumbereichen (BR) mit einem Grenzwinkel (α_{R}) zu vergleichen ist und die Aktivierungsbedingung (ab) erfüllt ist, wenn der Winkel kleiner als der Grenzwinkel ist.

4. Vorrichtung nach Anspruch 1, 2 oder 3, **dadurch gekennzeichnet, dass** die Planungsumgebungsteuereinrichtung (3) die Repräsentanzobjekte (O1, O2) entsprechend einer Verbindungsfunktion (vf) in Beziehung setzt, durch die festlegt wird, dass
a. zwei Beziehungspunkte ortsgleich sind oder
b. ein Beziehungspunkt auf einer Beziehungslinie liegt oder
c. ein Beziehungspunkt in einer Beziehungsfläche liegt oder
d. ein Beziehungspunkt in einem Beziehungsraumbereich liegt oder
e. zwei Beziehungslinien aufeinander liegen oder
f. eine Beziehungslinie in einer Beziehungsfläche liegt oder
g. eine Beziehungslinie in einem Beziehungsraumbereich liegt oder
h. zwei Beziehungsflächen ineinander liegen oder
i. eine Beziehungsfläche in einem Beziehungsraumbereich liegt oder
j. zwei Beziehungsraumbereiche ineinander liegen.

5. Vorrichtung nach einem der Ansprüche 1 bis 4, **dadurch gekennzeichnet, dass** eine Vielzahl von Aktivierungsbedingungen (ab) in einer Speichereinrichtung (31) der Planungsumgebungsteuereinrichtung (3) gespeichert sind und jedes Repräsentanzobjekt (O1, O2) einer oder mehreren Aktivierungsbedingungen (ab) zuweisbar ist.

6. Vorrichtung nach einem der Ansprüche 1 bis 5, **dadurch gekennzeichnet, dass** eine Vielzahl von Verbindungsfunktionen (vf) in einer Speichereinrichtung (31) der Planungsumgebungsteuereinrichtung (3) gespeichert sind und jedes Repräsentanzobjekt (O1, O2) einer oder mehreren Verbindungsfunktionen (vf) zuweisbar ist.

7. Vorrichtung nach einem der Ansprüche 5 oder 6, **dadurch gekennzeichnet, dass** eine oder mehrere Aktivierungsbedingungen (ab) und/oder eine oder mehrere Verbindungsfunktionen (vf) einem Repräsentanzobjekttyp (OT) zuweisbar sind und dass die Repräsentanzobjekte (O1, O2) einem Repräsentanzobjekttyp (OT) zuweisbar sind.

8. Vorrichtung nach einem der vorangegangenen Ansprüche, **dadurch gekennzeichnet, dass** die Planungsumgebungsteuereinrichtung (3) ein Computer, insbesondere ein Personal Computer PC ist.

9. Computerlesbarer Datenträger mit einem darauf aufgezeichneten Programm, das, wenn es in einen Computer (3) mit Anzeigeeinrichtung (1) und einer Handhabungseinrichtung (2) geladen und ausgeführt wird, eine Vorrichtung gemäß einem der Ansprüche 1 bis 7 realisiert.
